# DEMANDE DE BREVET EUROPEEN

(11) **EP 0 689 023 A1**
(43) Date de publication de la demande: **27.12.1995**
(21) Numéro de dépôt: 95401461.9
(22) Date de dépôt: 20.06.1995
(51) Int. Cl.: F28D 9/00, B23K 1/00, B23K 13/01, F28F 3/12

(54) **Echangeur de chaleur de faible épaisseur et procédé de fabrication d'un tel échangeur**

(30) Priorité: 21.06.1994 FR 9407587
(71) Demandeur: ELECTRICITE DE FRANCE Service National, F-75008 Paris (FR); COMPAGNIE GENERALE DES MATIERES NUCLEAIRES, F-78140 Velizy Villacoublay (FR)
(72) Inventeur: Fache, Philippe, F-77210 Samoreau (FR); Roussel, Joseph, F-84190 Beaumes de Venise (FR); Nuns, Jacques, F-77250 Ecuelles (FR); Devaux, Denis, F-07700 Bourg Saint Andeol (FR)
(74) Mandataire: Gutmann, Ernest

(57) **Abrégé**

Il s'agit d'un échangeur de chaleur (17) et d'un procédé de fabrication d'un échangeur comprenant une première plaque (23) métallique en matériau conducteur de la chaleur, ladite première plaque étant munie d'au moins un canal (18) de circulation d'un fluide. L'échangeur comporte une deuxième plaque (26) dont les dimensions en surface sont sensiblement identiques et qui, de préférence, est constituée en matériau identique à celui de ladite première plaque, parallèle et située à distance par rapport à ladite première plaque, lesdites plaques étant fixées entre elles de façon étanche par rapport au fluide et définissant entre elles au moins en partie le ou lesdits canaux (18) de circulation.

## Description

La présente invention concerne un échangeur de chaleur de faible épaisseur comprenant une première plaque métallique en matériau conducteur de la chaleur munie d'au moins un canal de circulation d'un fluide réfrigérant.

Elle concerne également un procédé de fabrication d'un tel échangeur.

Elle trouve, à titre d'exemple, une application importante dans le domaine du refroidissement des circuits magnétiques feuilletés de transformateurs alimentés à des fréquences supérieures à 50 Hertz, par exemple de plusieurs milliers d'Hertz. Les dégagements thermiques des circuits magnétiques augmentent en effet considérablement avec la fréquence et l'induction. Il est alors nécessaire de prévoir un refroidissement efficace et homogène du volume magnétique constituant le transformateur. Il va de soi que l'invention peut être appliquée à d'autres domaines, par exemple au refroidissement de circuits magnétiques HF en ferrite.

Pour ce faire, il est connu de fabriquer des échangeurs de chaleur de faible épaisseur, chacun constitué d'une plaque de métal conducteur thermique, en général du cuivre, de forme rectangulaire ou autre, de surface égale à celle des tôles magnétiques du transformateur à refroidir. Un tube de circulation d'un fluide réfrigérant est fixé par brasage sur le pourtour de la plaque et permet l'évacuation des calories.

Chaque échangeur est alors inséré entre deux paquets de tôles magnétiques dont l'épaisseur dépend de la quantité de chaleur à évacuer.

Une telle technique présente des inconvénients. En effet, si la périphérie des tôles en contact avec la plaque en cuivre du ou des échangeurs est correctement refroidie, essentiellement par conduction, il n'en est pas de même de sa zone centrale, plus éloignée du fluide réfrigérant.

La présente invention vise à fournir un échangeur mince de chaleur et un procédé de fabrication d'un tel échangeur répondant mieux que ceux antérieurement connus aux exigences de la pratique, notamment en ce qu'elle autorise un excellent refroidissement y compris dans la zone centrale des tôles en contact surfacique avec le refroidisseur, en ce qu'elle permet de ce fait d'augmenter la puissance et la dimension des transformateurs comprenant des matériaux magnétiques ainsi refroidis, tout en évitant les points chauds à l'origine de détériorations, et ce pour un coût abordable.

Dans ce but, l'invention propose notamment un échangeur de chaleur comprenant une première plaque métallique en matériau conducteur de la chaleur, ladite première plaque étant munie d'au moins un canal de circulation d'un fluide, caractérisé en ce que :
- il comporte une deuxième plaque, dont les dimensions de surface sont sensiblement identiques, parallèle et située à distance par rapport à ladite première plaque, lesdites plaques étant fixées entre elles de façon étanche par rapport au fluide et définissant entre elles au moins en partie ledit canal ou lesdits canaux de circulation.
La deuxième plaque est, de préférence, constituée en matériau identique à celui de ladite première plaque.

Il est ainsi réalisé un échangeur de faible épaisseur, notamment de quelques millimètres, par exemple de 3 millimètres, présentant une grande surface d'échange avec le fluide caloporteur, par exemple supérieure au dixième de la surface des plaques.

Dans des modes de réalisation avantageux, on a de plus recours à l'une et/ou à l'autre des dispositions suivantes :
- l'échangeur comporte des baguettes en matériau conducteur de la chaleur, situées et fixées entre les deux plaques, pour former le ou lesdits canaux de circulation ;
- l'une au moins des plaques comprend des gorges pour former le ou lesdits canaux de circulation ;
- lesdits canaux de circulation s'étendent longitudinalement et transversalement entre les deux plaques pour présenter une surface d'échange avec chaque plaque au moins supérieure à de l'ordre du 1/10, notamment 1/5 de la surface de ladite plaque ;
- les plaques et/ou les baguettes sont fixées entre elles par brasage ;
- l'épaisseur des plaques est comprise entre de l'ordre de 1 mm et de l'ordre de 10 mm, la distance entre lesdites plaques étant avantageusement comprise entre de l'ordre de 1 mm et de l'ordre de 10 mm ;
- lesdites plaques et/ou une ou plusieurs baguettes sont percées de part en part de trous de fixation de l'échangeur sur des pièces à refroidir.

L'invention propose également un procédé de fabrication d'un échangeur de chaleur caractérisé en ce que
- on réalise la fixation des plaques entre elles, ou des baguettes sur les plaques, par brasage, en intercalant des feuilles de brasure, notamment aux pointes d'appui, entre les plaques et/ou les plaques et les faces en vis à vis des baguettes, en chauffant ledit échangeur jusqu'à la fusion complète de la brasure tout en comprimant simultanément lesdites plaques l'une contre l'autre,
- et on fixe aux extrémités des canaux formés entre les plaques, des raccords de connexion avec un circuit d'alimentation en fluide.

Avantageusement on insère l'échangeur à constituer en sandwich entre deux plaques, par exemple en acier inoxydable, notamment dans les cas où l'on souhaiterait les réutiliser ultérieurement, d'épaisseur supérieure à de l'ordre de 15 mm, lesdites plaques en acier étant séparées des plaques formant les parois de l'échangeur par des feuilles de mica ou équivalent, et on comprime ledit échangeur entre lesdites plaques en acier pendant le chauffage.

Dans un mode de réalisation avantageux, les plaques étant en acier magnétique, le chauffage se fait par induction.

L'invention sera mieux comprise à la lecture de la description des modes de réalisation donnés ci-après à titre d'exemple non limitatif.

Elle se réfère aux dessins qui l'accompagnent dans lesquels :
La figure 1 est une vue de dessus en plan de la première plaque avec baguettes, d'un échangeur selon un premier mode de réalisation de l'invention.
La figure 2 est une vue en coupe selon II-II de la plaque de la figure 1.
La figure 3 est une vue de dessus en plan de la deuxième plaque correspondant à la première plaque de la figure 1.
La figure 4 est une vue schématique en coupe illustrant la fabrication d'un échangeur obtenu avec des première et deuxième plaques similaires à celles des figures 1 à 3.
La figure 5 est une vue en coupe de l'échangeur de la figure 4 une fois terminé.
La figure 6 est une vue de dessus en plan de la première plaque avec gorges, d'un échangeur selon un second mode de réalisation de l'invention.
La figure 7 est une vue en coupe selon VII-VII de la plaque de la figure 6.
La figure 8 est une vue de dessus en plan de la deuxième plaque correspondant à la première plaque de la figure 6.
La figure 9 est une vue schématique en coupe illustrant la fabrication d'un échangeur obtenu avec des plaques similaires à celles des figures 6 et 8.
La figure 10 est une vue en coupe de l'échangeur de la figure 9 une fois terminé.
La figure 11 est une vue schématique en coupe d'un transformateur comprenant des refroidisseurs selon l'invention.

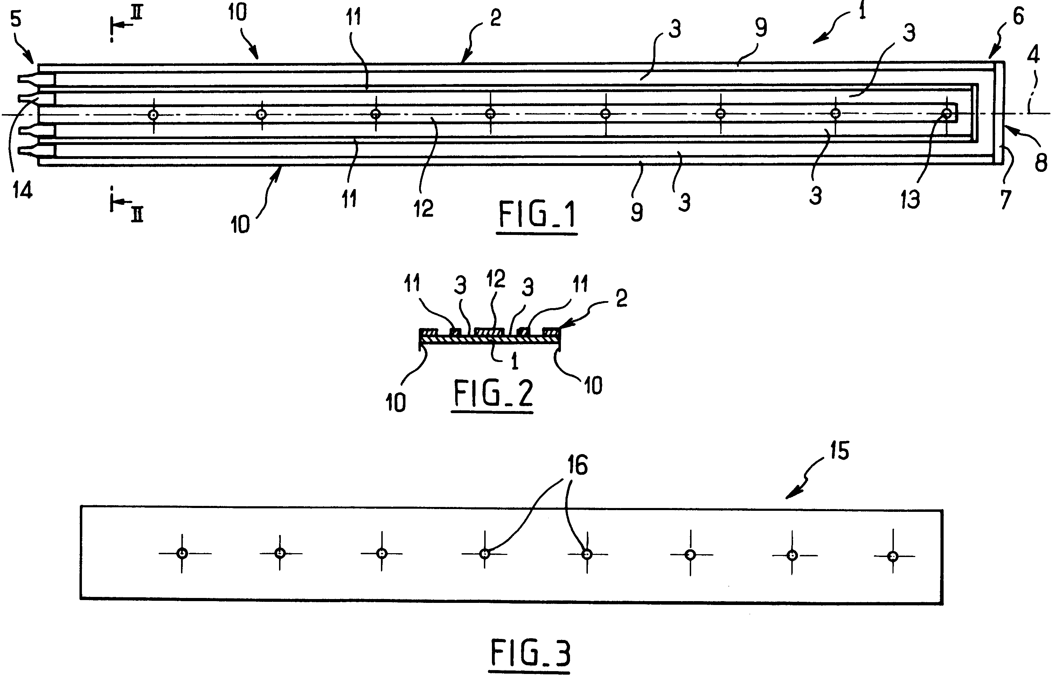

Les figures 1 et 2 montrent une première plaque 1 en cuivre, de forme rectangulaire allongée, d'épaisseur par exemple égale à 3 mm, sur laquelle est fixé par brasage à l'argent un ensemble 2 de baguettes rectilignes de section rectangulaire, en cuivre.

Les baguettes sont toutes de même épaisseur, par exemple égale à 5 mm. Elles sont propres à délimiter entre elles et avec la première et la deuxième plaque des canaux 3 en forme de U dont les jambes s'étendent dans le sens longitudinal, symétriquement par rapport à un axe central 4, lesdits canaux étant par exemple de largeur égale à 5 mm.

Plus précisément, l'ensemble de baguettes comporte par exemple cinq baguettes longitudinales allongées disposées parallèlement au côté longitudinal de la plaque 1 rectangulaire, chaque baguette longitudinale comprenant une extrémité en contact avec un des bords transversaux 5 de ladite plaque, et une extrémité formant la partie interne, ou externe, de la courbe du U, via ou non une baguette transversale complémentaire 6 perpendiculaire aux baguettes longitudinales, la baguette transversale la plus externe 7 étant située le long de l'autre bord 8 de la plaque 1.

De façon plus détaillée, l'ensemble 2 de baguettes comporte deux baguettes longitudinales latérales 9, fixées sur et le long des côtés 10 de la plaque 1, par exemple de largeur 3 mm, deux baguettes longitudinales intermédiaires 11, de largeur plus petite, par exemple de largeur égale à 1 ou 2 millimètres, et une baguette longitudinale centrale 12, de plus grande largeur, par exemple égale à 5 ou 10 millimètres, ladite baguette longitudinale centrale étant régulièrement percée de part en part de trous 13, situés en vis à vis de trous identiques percés dans la plaque 1.

Les canaux 3 sont par ailleurs terminés à leur extrémité ouverte située du côté 5 de la plaque 1, par des buses 14, en cuivre, fixées par brasage à l'argent sur la plaque et les bords externes des baguettes. Ces buses sont agencées pour se connecter à un circuit d'alimentation en fluide réfrigérant (non représenté).

La figure 3 montre une deuxième plaque 15 en cuivre, de formation d'un échangeur selon l'invention.

Dans ce mode de réalisation, cette deuxième plaque est de de géométrie identique et d'épaisseur égale à la plaque 1.

Elle est propre à recouvrir les baguettes 2 avec lesquelles elle est également fixée par brasage à l'argent.

Des trous 16 perçant ladite plaque 15 de part en part sont par ailleurs prévus et agencés pour tomber en vis à vis des trous 13.

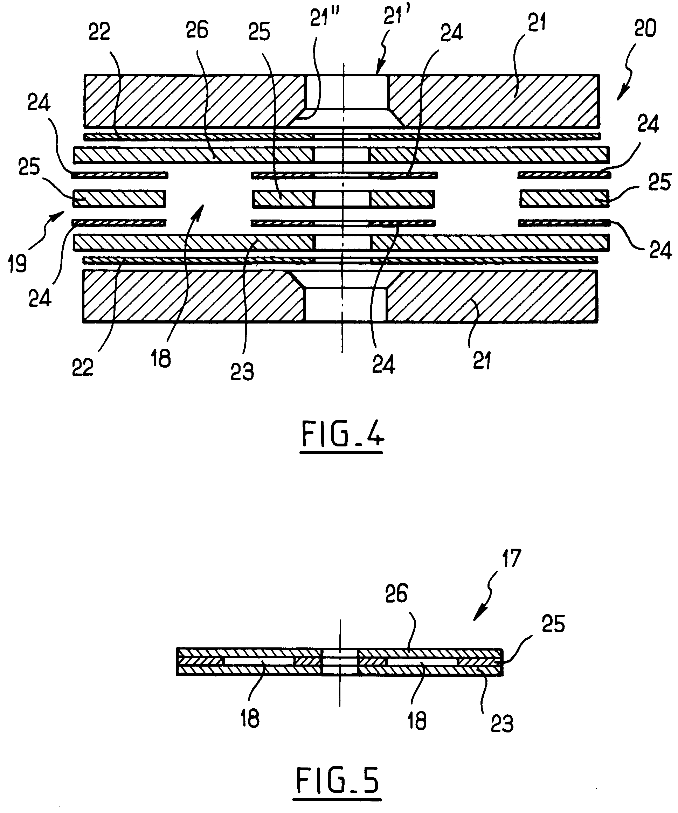

On va maintenant décrire, en référence à la figure 4, la fabrication de l'échangeur 17 représenté en coupe à la figure 5, ledit échangeur étant muni d'un seul canal interne 18 de refroidissement en U.

Les opérations préliminaires suivantes sont tout d'abord réalisées :
- Découpe aux côtes préalablement déterminées des première et deuxième plaques, ainsi que des baguettes.

Avantageusement les dimensions des plaques et des baguettes sont prévues légèrement supérieures de quelques millimètres, au niveau du contour extérieur 19 de l'échangeur à fabriquer.

Cette partie en saillie permet d'enlever les coulures éventuelles de brasure sur la périphérie, lors de la rectification finale après brasage.
- Perçage des première et deuxième plaques, ainsi que de la baguette centrale.
- Ebavurage pour obtention d'un bon état de surface.
- Traitement de surface des plaques et baguettes par dégraissage, en vue d'assurer une prise homogène et correcte de la brasure.

Lorsque toutes ces opérations ont été réalisées, les plaques, baguettes et feuilles de brasage, par exemple constituées par du feuillard à l'argent de 2/10 de mm d'épaisseur, sont montées dans un dispositif 20 de maintien, permettant la fabrication, qui va maintenant être décrit en référence à la figure 4.

Le dipositif 20 est constitué de deux plaques 21 d'acier magnétique, par exemple d'acier inoxydable, de forte épaisseur (supérieure à de l'ordre de 15 mm, par exemple de 25 mm), agencées pour tenir l'échangeur en sandwich pendant l'opération de brasage.

La puissance induite étant plus importante dans un matériau magnétique comme l'acier, la montée en température de l'échangeur et de la brasure, jusqu'à la fusion de cette dernière, est ainsi assurée principalement par transfert de chaleur par conduction des plaques d'acier vers les parois de l'échangeur, ce qui permet une bonne homogénéité des températures dans les éléments chauffants de l'échangeur, homogénéité encore favorisée par la forte conductivité thermique du cuivre.

L'emploi d'un matériau inoxydable évite par ailleurs une formation trop importante de calamine.

Les plaques 21 peuvent donc être réutilisées facilement pour le brasage d'un autre échangeur de géométrie identique après un simple nettoyage.

Pour éviter la formation d'étincelles pendant le chauffage par induction entre les plaques d'acier 21 et l'échangeur 17, deux feuilles 22 de mica de très faible épaisseur (par exemple quelques dixièmes de mm) sont insérées entre les plaques en acier et l'échangeur. Ce phénomène de formation d'étincelles, non maîtrisé, crée en effet des traces de piqûres en certains points de l'échangeur.

Pour éviter les coulures de brasure sur les plaques d'acier, celles-ci ont par ailleurs avantageusement une largeur sensiblement égale à celle de l'échangeur. En pratique, un débordement de l'ordre de 1 mm de l'échangeur par rapport aux plaques d'acier donne satisfaction.

Il suffit alors de rectifier la largeur de l'échangeur à l'aide d'une bande abrasive après l'opération de brasage.

Pour assurer le serrage et faciliter le montage de l'ensemble constitué par l'échangeur 17 et le dispositif de maintien 20, les plaques d'acier inoxydable 21 sont percées d'orifices 21', de façon similaire à l'échangeur, mais à un diamètre supérieur par exemple de 2 mm.

Les orifices 21' sont de plus chanfreinés en 21", du côté de l'échangeur, de façon à éviter un brasage cuivre/acier lors de la fusion de la brasure (coulure).

Enfin, les feuilles de mica sont également percées de la même façon que les plaques d'acier pour permettre le passage des vis de fixation (non représentées).

Le maintien de l'échangeur en pression dans le dispositif est en effet assuré par des vis/écrous traversant de part en part le dispositif, le diamètre des vis étant inférieur de quelques millimètres à celui des trous de l'échangeur.

On va maintenant décrire l'assemblage de l'échangeur 17 avec le dispositif de maintien 20 en référence à la figure 4.

Les opérations suivantes sont effectuées :
- Pose de la plaque inférieure 21 en acier inoxydable magnétique munie de vis et rondelles (non représentées). Celles-ci sont, selon les besoins, soit électriquement isolées, par exemple sont en mica, soit non isolées.
- Pose de la feuille de mica 22 sur la plaque inférieure 21.
- Pose de la première plaque 23 de cuivre sur la feuille de mica 22.
- Pose du feuillard de brasure 24 aux endroits où seront disposées les baguettes.
- Pose des baguettes 25 de façon à respecter les canaux hydrauliques 18 définis au préalable.
- Pose du feuillard de brasure 24 sur les baguettes.
- Pose de la deuxième plaque 26 sur le feuillard.
- Pose d'une deuxième feuille de mica 22 sur la deuxième plaque 26.
- Pose de la plaque supérieure 21 en acier inoxydable magnétique.
- Mise en place des rondelles et écrous sur les vis (non représentés sur les figures).
- Serrage des vis à l'aide d'une clé dynamométrique pour assurer une pression de serrage uniforme.

Dans le mode de réalisation de l'invention plus particulièrement décrit ici, on utilise une méthode de brasage par chauffage inductif/conductif.

Le dispositif 20 de maintien joue dans ce cas le rôle de guide des lignes de champs. Les courants induits s'y développent et l'énergie thermique se trouve alors transférée des plaques en acier vers la masse en cuivre de l'échangeur.

Un tel chauffage inductif permet par ailleurs de braser en continu, par défilement dans un système inducteur connu en lui-même, ce qui autorise l'accès aisé à l'extrémité de l'échangeur pour fixer les raccords hydrauliques 14 (cf. figure 1).

Plus précisément, on utilise par exemple un inducteur solénoïde alimenté par un convertisseur de fréquence M.F, un système de déplacement du dispositif de maintien dans l'inducteur permettant de réaliser le brasage en continu.

Le couple puissance/vitesse de défilement est choisi de manière à assurer la fusion complète de la brasure.

Pendant cette opération, les raccords hydrauliques 14 sont par ailleurs mis en place, lorsque la température est suffisante, puis brasés au chalumeau en utilisant de préférence une baguette enrobée.

Quand l'opération complète de brasage est réalisée, le dispositif de maintien est démonté.

Les surfaces externes de l'échangeur sont alors nettoyées par abrasion, puis les côtés de l'échangeur sont rectifiés pour obtenir les dimensions finales de l'échangeur 17 tel que représenté en coupe sur la figure 5.

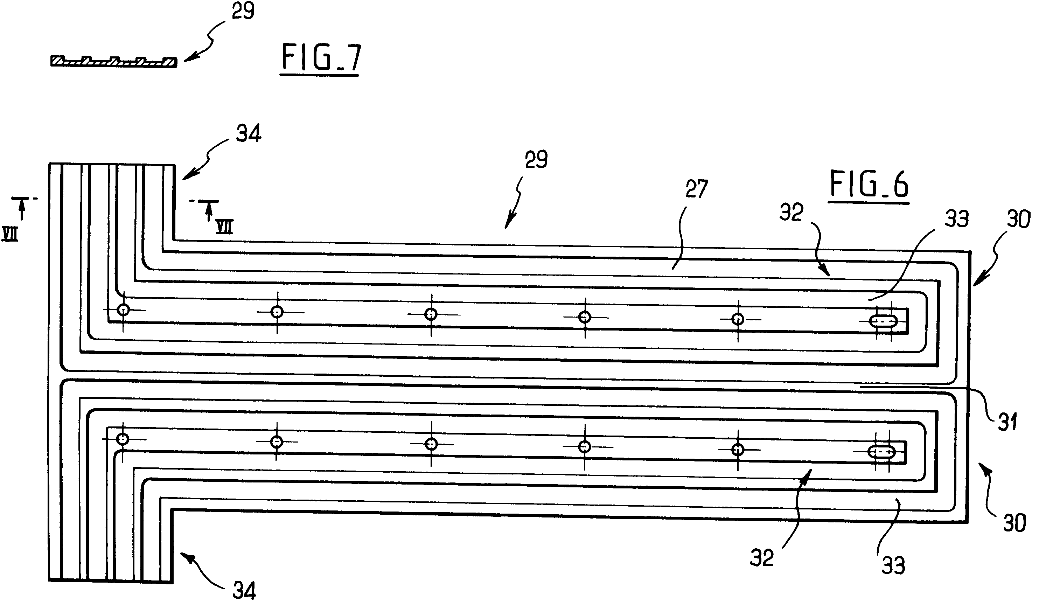

Les figures 6, 7 et 8 montrent un autre mode de réalisation de l'échangeur selon l'invention, présentant des canaux hydrauliques 27 réalisés par fraisage.

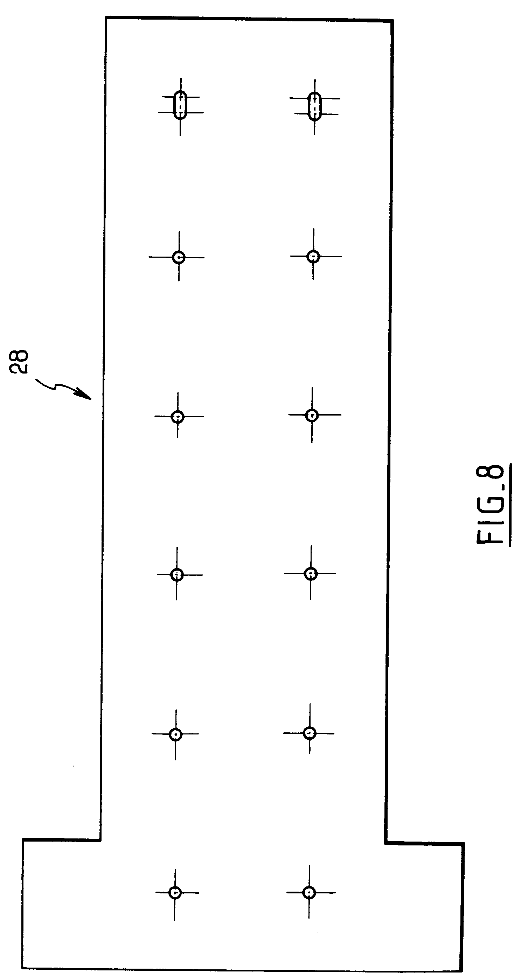

L'échangeur est composé de deux plaques 28 et 29 de cuivre, d'épaisseur différente. La première plaque 28 (figure 8), appelée plaque supérieure, a une épaisseur de l'ordre d'un à quelques millimètres ; la deuxième plaque 29 (figures 6 et 7), appelée plaque inférieure, a quant à elle une épaisseur égale à celle de la plaque supérieure augmentée d'une valeur correspondant à la hauteur souhaitée pour les canaux 28. Ceux-ci sont obtenus par fraisage dans la plaque 29.

Sur le mode de réalisation de la figure 6, deux circuits 30 symétriques par rapport à un axe 31 sont prévus dans la plaque inférieure. Ils comprennent chacun deux parties 32 et 33 emboîtées en U, présentant une forme similaire à celle décrite en référence à la figure 1, et une partie d'extrémité 34, coudée, dirigée à angle droit par rapport aux jambes du U, vers l'extérieur de la plaque 2, de connexion avec le circuit d'alimentation en fluide de circulation par l'intermédiaire de raccords (non représentés). Des orifices sont par ailleurs prévus dans les plaques pour fixation sur le dispositif à refroidir, comme décrit ci-avant. Une fois les plaques réalisées, elles sont montées dans le dispositif de maintien, précédemment décrit, afin de réaliser l'opération de brasage, de façon similaire.

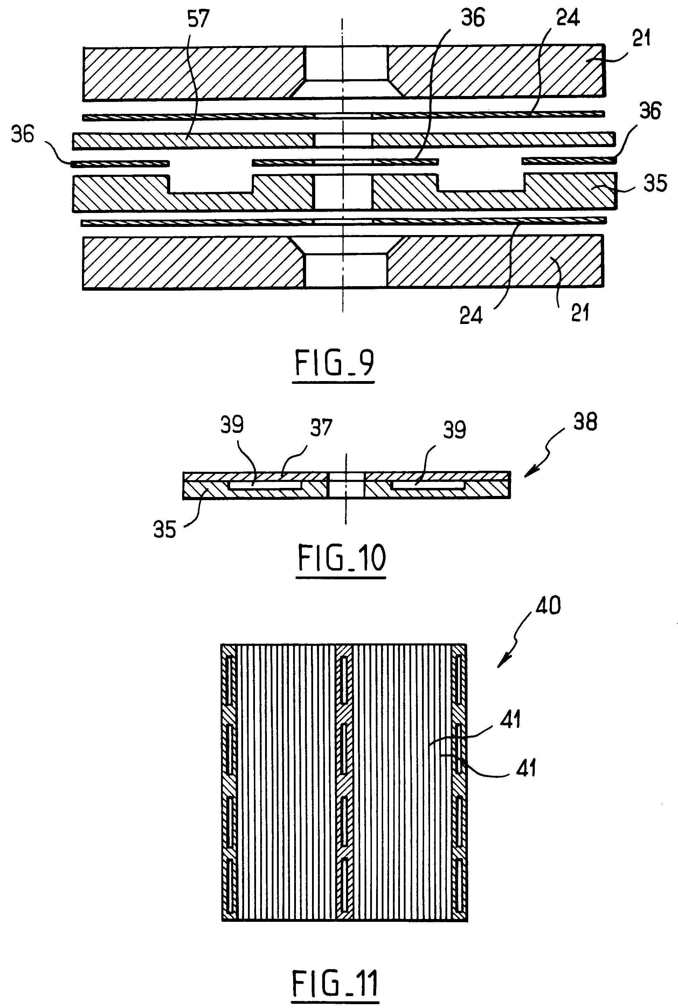

Plus précisément, la figure 9 montre en coupe la manière dont est réalisé l'assemblage d'une plaque inférieure à gorges avec une plaque supérieure :

Les opérations suivantes sont réalisées :
- Pose de la plaque inférieure 21 en acier inoxydable magnétique, munie des vis et rondelles (non représentées).
- Pose de la feuille de mica 22 sur la plaque inférieure 21.
- Pose de la première plaque inférieure 35 en cuivre.
- Pose du feuillard de brasure aux endroits de contacts entre la plaque supérieure et la plaque inférieure. L'utilisation d'un feuillard à l'argent de 2/10 mm d'épaisseur muni de décapant donne de bons résultats.
- Pose de la plaque supérieure 37 en cuivre.
- Pose d'une feuille de mica 22 sur la plaque 37.
- Pose de la plaque supérieure 21 en acier inoxydable magnétique.
- Mise en place des rondelles et écrous sur les vis (non représentés).
- Serrage des vis à l'aide d'une clé dynamométrique pour assurer une pression de serrage uniforme.

Pour l'opération de brasage de l'échangeur, on utilise, par exemple et ici encore, un inducteur solénoïde alimenté par un convertisseur de fréquence M.F. comme décrit précédemment.

Un système de déplacement du dispositif de maintien dans l'inducteur permet de réaliser le brasage en continu.

La figure 10 montre, en coupe, l'échangeur 38 obtenu grâce à l'assemblage décrit ci-dessus, comportant les canaux de circulation 39.

La figure 11 est une vue en coupe d'un transformateur 40 constitué de plaques de tôle 41, muni d'échangeurs 42 selon l'invention.

De tels échangeurs, de faible épaisseur, sont insérés entre deux paquets de plaques magnétiques, par exemple tôles ou plaques de ferrite et permettent de maintenir le circuit magnétique dans lequel ils sont disposés à des températures raisonnables, leurs performances thermiques étant bonnes.

De plus, leur faible épaisseur et l'utilisation de matériau tel que le cuivre n'engendre pas de pertes calorifiques significatives pour les fréquences rencontrées.

Ces échangeurs, moyennant quelques précautions, sont par ailleurs facilement réalisables, surtout lorsque leur fabrication est effectuée en une seule opération de brasage, en cas de chauffage inductif.

## Revendications

1. Echangeur de chaleur (17, 38) comprenant une première plaque (23, 29, 35) métallique en matériau conducteur de la chaleur, ladite première plaque étant munie d'au moins un canal (18, 27, 39) de circulation d'un fluide, caractérisé en ce que
- il comporte une deuxième plaque (15, 26, 28', 37) dont les dimensions en surface sont sensiblement identiques et qui, de préférence, est constituée en matériau identique à celui de ladite première plaque, parallèle et située à distance par rapport à ladite première plaque, lesdites plaques étant fixées entre elles de façon étanche par rapport au fluide et définissant entre elles au moins en partie le ou lesdits canaux (18, 39) de circulation.

2. Echangeur selon la revendication 1, caractérisé en ce que il comporte des baguettes (12, 6, 7, 9, 11, 12, 25) en matériau conducteur de la chaleur, situées et fixées entre les deux plaques, pour former le ou lesdits canaux de circulation.

3. Echangeur selon la revendication 1, caractérisé en ce que l'une au moins des plaques (29, 35) comprend des gorges (27, 39) pour former lesdits canaux de circulation.

4. Echangeur selon l'une quelconque des revendications précédentes, caractérisé en ce que lesdits canaux de circulation s'étendent longitudinalement et transversalement entre les deux plaques pour présenter une surface d'échange avec chaque plaque au moins supérieure à de l'ordre du 1/10, notamment 1/5 de la surface de ladite plaque.

5. Echangeur selon l'une quelconque des revendications précédentes, caractérisé en ce que les plaques et/ou les baguettes sont fixées entre elles par brasage.

6. Echangeur selon l'une quelconque des revendications précédentes, caractérisé en ce que l'épaisseur des plaques est comprise entre de l'ordre de 1 mm et de l'ordre de 10 mm, et en ce que la distance entre lesdites plaques est comprise entre de l'ordre de 1 mm et de l'ordre de 10 mm.

7. Echangeur selon l'une quelconque des revendications précédentes, caractérisé en ce que lesdites plaques et/ou baguettes sont percées de part en part de trous (13, 16) de fixation de l'échangeur sur des pièces à refroidir.

8. Procédé de fabrication d'un échangeur (17, 38) constitué selon l'une quelconque des revendications précédentes, caractérisé en ce qu'on réalise la fixation des plaques (1, 23, 29, 35 ; 15, 26, 28, 37) entre elles, ou des baguettes (6, 7, 9, 11, 12, 25) sur les plaques, par brasage, en intercalant des feuilles (24, 36) de brasure entre les plaques et/ou les plaques et les faces en vis à vis des baguettes, en chauffant ledit échangeur jusqu'à la fusion complète de la brasure et en comprimant simultanément lesdites plaques l'une contre l'autre, et on fixe aux extrémités des canaux (3, 18, 27, 39) formés entre les plaques, des raccords (14) de connexion avec un circuit d'alimentation en fluide.

9. Procédé selon la revendication 8, caractérisé en ce que on insère l'échangeur à constituer en sandwich entre deux plaques (2) métalliques d'épaisseur supérieure à de l'ordre de 15 mm, lesdites plaques métalliques étant séparées des plaques formant les parois de l'échangeur par des feuilles (22) de mica ou équivalent, et on comprime ledit échangeur entre lesdites plaques métalliques (21) pendant le chauffage.

10. Procédé selon la revendication 9, caractérisé en ce que les plaques (20) étant en acier, de préférence en acier magnétique, le chauffage se fait par induction.
